(19) Europäisches Patentamt
European Patent Office
Office européen des brevets

(11) EP 0 741 800 B1

(12) EUROPÄISCHE PATENTSCHRIFT

(45) Veröffentlichungstag und Bekanntmachung des Hinweises auf die Patenterteilung:
**18.11.1998 Patentblatt 1998/47**

(21) Anmeldenummer: **95906950.1**

(22) Anmeldetag: **16.01.1995**

(51) Int Cl.[6]: **C14C 9/00**

(86) Internationale Anmeldenummer:
**PCT/EP95/00144**

(87) Internationale Veröffentlichungsnummer:
**WO 95/20056 (27.07.1995 Gazette 1995/32)**

(54) **WÄSSRIGE LÖSUNGEN ODER DISPERSIONEN VON COPOLYMERISATEN**

AQUEOUS SOLUTIONS OR DISPERSIONS OF COPOLYMERS

SOLUTIONS OU DISPERSIONS AQUEUSES DE COPOLYMERES

(84) Benannte Vertragsstaaten:
**AT CH DE DK ES FR GB IT LI NL PT SE**

(30) Priorität: **25.01.1994 DE 4402029**

(43) Veröffentlichungstag der Anmeldung:
**13.11.1996 Patentblatt 1996/46**

(73) Patentinhaber: **BASF AKTIENGESELLSCHAFT**
**67056 Ludwigshafen (DE)**

(72) Erfinder:
- **BIRKHOFER, Hermann**
  **D-67069 Ludwigshafen (DE)**
- **KNEIP, Michael**
  **D-67227 Frankenthal (DE)**
- **DANISCH, Peter**
  **D-67065 Ludwigshafen (DE)**
- **DENZINGER, Walter**
  **D-67346 Speyer (DE)**
- **KISTENMACHER, Axel**
  **D-67061 Ludwigshafen (DE)**
- **HARTMANN, Heinrich**
  **D-67117 Limburgerhof (DE)**

(56) Entgegenhaltungen:
**EP-A- 0 412 389**
**EP-A- 0 418 661**
**WO-A-93/05188**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 741 800 B1

Printed by Jouve, 75001 PARIS (FR)

## Beschreibung

Die vorliegende Erfindung betrifft neue wäßrige Lösungen oder wäßrige Dispersionen von Copolymerisaten. Weiterhin betrifft die Erfindung die Verwendung dieser wäßrigen Lösungen oder Dispersionen zum Fetten und Füllen von Leder und Pelzfellen.

Aus der DE-A 39 26 167 (1) ist die Verwendung von Copolymerisaten, die durch radikalische Copolymerisation von $C_8$- bis $C_{40}$-Monoolefinen mit ethylenisch ungesättigten $C_4$- bis $C_8$-Dicarbonsäureanhydriden nach Art einer Substanzpolymerisation bei 80 bis 300°C zu Copolymerisaten mit Molmassen von 500 bis 20 000, anschließende Solvolyse der Anhydridgruppen der Copolymerisate und zumindest partielle Neutralisation der bei der Solvolyse entstandenen Carboxylgruppen in wäßrigem Medium mit Basen erhältlich sind und die in Form von wäßrigen Lösungen oder Dispersionen vorliegen, als Mittel zum Hydrophobieren von Leder und Pelzfellen bekannt.

Aus der DE-A 39 26 168 (2) ist die Verwendung von Copolymerisaten, die durch radikalische Polymerisation von $C_8$- bis $C_{40}$-Alkylvinylethern oder Mischungen aus $C_8$- bis $C_{40}$-Alkylvinylethern und bis zu 50 mol-% $C_8$- bis $C_{40}$-Monoolefinen mit ethylenisch ungesättigten $C_4$- bis $C_8$-Dicarbonsäureanhydriden zu Copolymerisaten mit Molmassen von 500 bis 20 000, anschließende Solvolyse der Anhydridgruppen der Copolymerisate und zumindest partielle Neutralisation der bei der Solvolyse entstandenen Carboxylgruppen in wäßrigem Medium mit Basen erhältlich sind und die in Form von wäßrigen Lösungen oder Dispersionen vorliegen, als Mittel zum Hydrophobieren von Leder und Pelzfellen bekannt.

Aus der DE-A 39 31 039 (3) ist die Verwendung von Copolymerisaten, die 50 bis 90 Gew.-% $C_8$- bis $C_{40}$-Alkyl (meth)acrylate und/ oder Vinylester von $C_8$- bis $C_{40}$-Carbonsäuren und 10 bis 50 Gew.-% monoethylenisch ungesättigte $C_3$- bis $C_{12}$-Carbonsäuren, monoethylenisch ungesättigte $C_4$- bis $C_{12}$-Dicarbonsäureanhydride und/ oder Derivate hiervon einpolymerisiert enthalten und die Molmassen von 500 bis 30 000 haben, in zumindest partiell neutralisierter Form in wäßriger Lösung oder Dispersionen als Mittel zum Hydrophobieren von Leder und Pelzfellen bekannt.

Die die Copolymerisate aus den Schriften (1) bis (3) enthaltenden Lederhydrophobiermittel sind frei von zusätzlichen Emulgatoren. Neben der hydrophobierenden Wirkung haben diese Mittel darüber hinaus noch eine gewisse fettende und nachgerbende Wirkung.

In der EP-A 372 746 (4) werden wäßrige Dispersionen wasserunlöslicher amphiphiler Copolymerisate als Hilfsmittel zur Behandlung von gegerbtem Leder beschrieben. Diese amphiphilen Copolymerisate sind aus einem größeren Anteil eines hydrophoben Monomers, beispielsweise langkettigen Alkyl(meth)acrylaten, primären Alkenen oder Vinylestern langkettiger Alkylcarbonsäuren, und einem kleineren Anteil eines hydrophilen Monomers, beispielsweise (Meth) Acrylsäure, Maleinsäure und deren Anhydriden, aufgebaut. Die Mittel dienen zur Verbesserung der Wasserfestigkeit der Leder. Die Dispersionen werden ohne zusätzliche Emulgatoren zur Anwendung gebracht.

Aus der DE-C 26 29 748 (5) ist die Verwendung von mit Alkalimetallbasen oder Aminen verseiften Copolymerisaten aus $C_{10}$- bis $C_{30}$-Olefinen und Maleinsäureanhydrid zum Füllen und Fetten von Leder und Pelzfellen bekannt. Die hydrolysierten Copolymerisate können noch mit Alkalibisulfit umgesetzt werden. Da die Copolymerisate in organischen Lösungsmitteln hergestellt und diese nicht entfernt werden, enthalten die daraus hergestellten wäßrigen Copolymerisatdispersionen beträchtliche Mengen organischer Lösungsmittel, beispielsweise Xylol oder Dodecylbenzol.

In der WO-A-93 05 188 sind wäßrige Dispersionen zur Behandlung von leder beschrieben, welche neben bestimmten Polymeren oberflächenaktive Substanzen, wie z.B. Sulfoberusteinsäurehalbester langkettiger Fettalkohole, enthalten können.

Aufgabe der vorliegenden Erfindung war es, Lederfettungsmittel mit verbesserten Eigenschaften bereitzustellen. Dabei sollte auf die Mitverwendung organischer Lösungsmittel ganz verzichtet werden, da diese aus ökologischer Sicht unerwünscht sind. Insbesondere sollten die Mittel eine reine fettende und füllende Wirkung aufweisen und der in der Regel bei derartigen Mittel mitzubeobachtende hydrophobierende Effekt sollte ganz unterdrückt oder zumindest vernachlässigbar klein sein, da es sich bei Lederfettung und Lederhydrophobierung um zwei grundsätzlich verschiedene Anwendungsrichtungen derartiger Nachbehandlungsmittel handelt.

Demgemäß wurden wäßrige Lösungen oder wäßrige Dispersionen von Copolymerisaten gefunden, die durch radikalische Copolymerisation von

$A^1$) 40 bis 60 mol-% $C_6$- bis $C_{40}$-Monoolefinen oder $C_6$- bis $C_{40}$-Alkylvinylethern oder Mischungen aus $C_6$- bis $C_{40}$-Alkylvinylethern und bis zu 50 mol-%, bezogen auf die Gesamtmenge der Komponente $A^1$, $C_6$- bis $C_{40}$-Monoolefinen mit

$B^1$) 60 bis 40 mol-% monoethylenisch ungesättigten $C_4$- bis $C_8$-Dicarbonsäureanhydriden

oder durch radikalische Copolymerisation von

$A^2$) 50 bis 90 Gew.-% $C_6$- bis $C_{40}$-Alkylacrylaten oder -methacrylaten oder Vinylestern von $C_6$- bis $C_{40}$-Carbon-

säuren oder Mischungen hieraus mit

$B^2$) 10 bis 50 Gew.-% monoethylenisch ungesättigten $C_3$- bis $C_{12}$-Carbonsäuren, monoethylenisch ungesättigten $C_4$- bis $C_{12}$-Dicarbonsäureanhydriden, Halbestern oder Halbamiden von monoethylenisch ungesättigten $C_4$- bis $C_{12}$-Dicarbonsäuren, Amiden von monoethylenisch ungesättigten $C_3$- bis $C_{12}$-Carbonsäuren oder Mischungen hieraus

zu Copolymerisaten mit Molmassen von 500 bis 30 000 erhältlich sind, wobei die in wäßrigem Medium vorliegenden Carboxylgruppen zumindest partiell neutralisiert sind und ein Teil der Carboxylgruppen amidiert vorliegen kann, und die durch einen Gehalt von 0,5 bis 40 Gew.-%, bezogen auf die Menge an Copolymerisat, an Emulgatoren gekennzeichnet sind.

Die hier zum Einsatz gelangenden Copolymerisate aus den Komponenten $A^1$ und $B^1$ bzw. $A^2$ und $B^2$ sind aus den Schriften (1) bis (3) bekannt. Daher soll hier auf nähere Einzelheiten über ihre genaue Zusammensetzung, Beispiele für Monomerkomponenten und die Art ihrer Herstellung sowie Solvolyse, Neutralisation und Amidierung verzichtet werden; diese Informationen können den Schriften (1) bis (3) entnommen werden.

Als Monomere $A^1$ eignen sich besonders gut $C_8$- bis $C_{30}$-Monoolefine, insbesondere $C_{10}$- bis $C_{24}$-Olefine, sowie $C_8$- bis $C_{30}$-Alkylvinylether, insbesondere $C_{10}$- bis $C_{24}$-Alkylvinylether.

Als Monomere $A^2$ eignen sich besonders gut $C_8$- bis $C_{30}$-Alkyl(meth)-acrylate, insbesondere $C_{10}$- bis $C_{24}$-Alkyl (meth)acrylate, sowie Vinylester von $C_8$- bis $C_{30}$-Carbonsäuren, insbesondere von $C_{10}$- bis $C_{24}$-Carbonsäuren.

Als Monomere $B^1$ bzw. $B^2$ eignen sich besonders gut Acrylsäure, Methacrylsäure, Maleinsäure und vor allem Maleinsäureanhydrid.

Die Molmassen der beschriebenen Copolymerisate betragen vorzugsweise 500 bis 20 000, insbesondere 1000 bis 12000.

Die erfindungsgemäßen wäßrigen Lösungen oder Dispersionen weisen einen Gehalt von 0,5 bis 40 Gew.-%, vorzugsweise 3 bis 35 Gew.-%, insbesondere 10 bis 30 Gew.-%, bezogen auf die Menge an Copolymerisat, an Emulgatoren auf. Als Emulgatoren können im Prinzip alle in wäßrigen Systemen oberflächenaktive Verbindungen nichtionischen, anionischen, kationischen oder amphoteren Charakters eingesetzt werden. Besonders gute Ergebnisse erzielt man mit Vertretern der folgenden Gruppen von Emulgatoren:

(a) alkoxylierte Fettalkohole oder Oxoalkohole der allgemeinen Formel I

$$R^1 — (OX)_m — (OY)_n — OH \qquad (I)$$

in der

$R^1$ geradkettiges oder verzweigtes $C_6$- bis $C_{30}$-Alkyl oder -Alkenyl, insbesondere $C_8$- bis $C_{20}$-Alkyl oder -Alkenyl, bezeichnet,

X und Y jeweils unabhängig voneinander für Ethylen oder Propylen stehen und

m und n jeweils unabhängig voneinander Zahlen von 0 bis 100 bedeuten, wobei die Summe m + n 2 bis 100 betragen muß;

hiervon werden insbesondere ethoxylierte Fettalkohole oder Oxoalkohole mit 5 bis 90, vor allem 15 bis 80 Ethylenoxid (EO)-Einheiten bevorzugt, z.B. Isotridecanol mit 8 EO (Lutensol® AO 8 und TO 8, Produkte der BASF Aktiengesellschaft, wie im übrigen alle nachfolgend aufgeführten Handelsprodukte) oder Talgfettalkohol mit 11, 18, 25, 50 oder 80 EO (Lutensol AT 11, AT 18, AT 25, AT 50 und AT 80 bzw. Siligen® WL); gut eignen sich weiterhin auch gemischt propoxylierte (PO) und ethoxylierte Fettalkohole oder Oxoalkohole, z.B. $C_8/C_{10}$-Oxoalkohol mit 5,5 PO + 8,3 EO (Plurafac® LF 601), $C_{13}/C_{15}$-Oxoalkohol mit 21 EO + 4 PO (Plurafac LF 401) oder $C_{13}/C_{15}$-Oxoalkohol mit 12 EO + 6 PO (Plurafac LF 600);

(b) Blockpolymere aus Ethylenoxy- und Propylenoxy-Einheiten mit einer Molmasse von 500 bis 15000, insbesondere von 1000 bis 10000; Beispiele hierfür ist ein Blockpolymer aus 10 Gew.-% EO und 90 Gew.-% PO (Pluronic® RPE 2510);

(c) alkoxylierte Fettsäuren oder allgemeinen Formel II

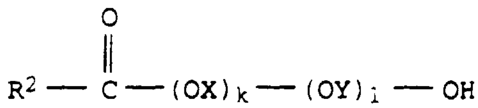

(II)

in der

$R^2$ geradkettiges oder verzweigtes $C_5$- bis $C_{29}$-Alkyl oder -Alkenyl, insbesondere $C_7$- bis $C_{19}$-Alkyl oder -Alkenyl, bezeichnet,

X und Y jeweils unabhängig voneinander für Ethylen oder Propylen stehen und

k und l jeweils unabhängig voneinander Zahlen von 0 bis 40 bedeuten, wobei die Summe k + l 2 bis 50 betragen muß;

hiervon werden insbesondere ethoxylierte Fettsäuren mit 2 bis 50 Ethylenoxid-Einheiten bevorzugt, z.B. Ölsäure mit 5,5 EO (Emulan® A), Tallölfettsäure mit 3 bis 10 EO oder Ricinusöl mit 35 bis 48 EO;

(d) ethoxylierte Fettsäureamide der allgemeinen Formel III

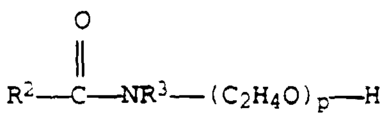

(III)

in der

$R^2$ die oben genannte Bedeutung hat,

$R^3$ Wasserstoff oder den Rest der Formel $—(C_2H_4O)_p—H$ bezeichnet und

p eine Zahl von 2 bis 30 bedeutet;

Beispiele hierfür sind Ölsäureamid-monoethoxylate, z.B. mit 10 EO ($R^3$ = H) (Lutensol FSA 10), oder Ölsäureamid-bisethoxylate, z.B. mit zweimal 5 bis 10 EO ($R^3 = (C_2H_4O)_{5-10}H$);

(e) Fettsäurealkanolamide der allgemeinen Formel IV

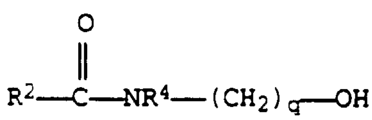

(IV)

in der

$R^2$ die oben genannte Bedeutung hat,

$R^4$ Wasserstoff oder den Rest der Formel $—(CH_2)_p—OH$ bezeichnet und

q eine Zahl von 2 bis 4, insbesondere 2 oder 3 bedeutet;

Beispiele hierfür sind Ölsäure-mono- und -diethanolamide (Lupritan® HDF);

(f) Fettsäure-Ammoniumsalze von gesättigten oder ungesättigten $C_6$- bis $C_{30}$-Fettsäuren, insbesondere $C_8$- bis $C_{20}$-Fettsäuren, mit Tri-$C_1$- bis $C_4$-alkylaminen oder mit Tetra-$C_1$- bis $C_4$-alkylammonium-Kationen, wobei die $C_1$-

bis $C_4$-Alkylgruppen in beiden Fällen zusätzlich Hydroxylgruppen tragen;
Beispiele hierfür ist das Ölsäure-Triethanolamin-Salz (Emulan FM);

(g) Fettalkoholphosphate der allgemeinen Formel V

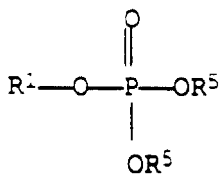

(V)

in der

$R^1$ die obengenannte Bedeutung hat und die beiden Reste

$R^5$ unabhängig voneinander für Wasserstoff oder $C_1$- bis $C_4$-Alkyl stehen, wobei mindestens einer der Reste $R^5$ ungleich Wasserstoff ist;

(h) $C_6$- bis $C_{30}$-Alkylglucoside;
Beispiele hierfür sind $C_{10}$- bis $C_{14}$-Monoalkylglucoside (Lutensol GD 70);

(i) Alkylphenolalkoxylate der allgemeinen Formel (VI)

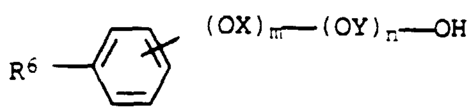

(VI)

in der

$R^6$ für geradkettiges oder verzweigtes $C_1$- bis $C_{20}$-Alkyl, insbesondere $C_4$- bis $C_{13}$-Alkyl, steht und

X, Y, m und n die oben genannten Bedeutungen haben;

hiervon werden insbesondere Alkylphenolethoxylate mit 2 bis 60 Ethylenoxid-Einheiten bevorzugt, z.B. p-Isooctylphenol mit 5,7 oder 23 EO (Lutensol AP 6) oder p-Isononylphenol mit 4,5, 8, 9, 10, 14, 20 oder 58 EO (Emulan PO, Lutensol AP 8, AP 9, AP 10, AP 14, AP 20, Emulan NP 50),

(j) 2-Sulfobernsteinsäure-mono- oder -di-$C_5$- bis $C_{20}$-alkylester;
Beispiele hierfür sind 2-Sulfobernsteinsaure-diisoamylester-Natriumsalz (Lutensit® ABP) und 2-Sulfobernsteinsäure-di(2-ethylhexyl)ester-Natriumsalz (Lutensit ABO);

(k) N-($C_9$- bis $C_{20}$-Acyl)aminosäuren mit 2 bis 6 C-Atomen im Aminosäure-Grundkörper;
von diesen N-($C_9$-$C_{20}$-Acyl)-aminosäuren sind solche mit 2 bis 4 C-Atomen, mit der Aminogruppe in α-Stellung zur in Salzform vorliegenden Carboxlygruppe und die am Aminstickstoffatom zusätzlich durch eine Methylgruppe substituiert sind, bevorzugt; davon weisen eine besondere überlegene Wirkung die Fettsauresarkoside von gesättigten oder ungesättigten Fettsäuren mit 9 bis 20, insbesondere 16 bis 18 C-Atomen auf; als Salze kommen die Alkalimetallsalze, insbesondere die des Natriums oder Kaliums, die Ammoniumsalze oder Salze eines Mono-, Di- oder Trialkanolamins mit 2 bis 4 C-Atomen im Alkanolrest, insbesondere des Mono-, Di- oder Triethanolamins, in Betracht; ein besonders bevorzugtes Sarkosid ist das Ölsäuresarkosid oder N-Oleoylsarkosin (Medialansäure); weiterhin sind insbesondere das N-Stearoyl-sarkosin, N-Lauroyl-sarkosin und N-Isononanoyl-sarkosin hervorzuheben, jeweils in Form der obengenannten Salze.

Setzt man Mischungen aus den Emulgatoren der Gruppen (a) bis (k) ein, kann es in einigen Fällen noch zu einer Wirkungsverstarkung kommen. Derartige Mischungen sind beispielsweise Mischungen aus Emulgatoren (a) und (c),

(a) und (h) oder (a) und (k) im Gew.-Verhältnis von jeweils 5 : 95 bis 95 : 5, insbesondere 20 : 80 bis 80 : 20.

Das Zumischen der Emulgatoren zu den Copolymerisaten kann auf verschiedenen Stufen des Herstellungsprozesses der erfindungsgemäßen wäßrigen Lösungen oder Dispersionen geschehen. Man kann die Emulgatoren zu einer Schmelze der Copolymerisate geben, wenn diese durch Substanzpolymerisation hergestellt wurden, und anschließend die Solvolyse, Neutralisation und/oder Amidierung durchführen. Man kann weiterhin die Emulgatoren mit einer wäßrigen Lösung des Neutralisationsmittels, z.B. Alkalimetallhydroxid wie NaOH oder KOH, mischen und diese Lösung den Copolymerisaten zugeben. Man kann auch die Emulgatoren erst zum Schluß nach Herstellung der wäßrigen Lösung oder Dispersionen der solvolysierten, neutralisierten und/oder amidierten Copolymerisate zugeben. Es ist unter Umständen auch möglich, die Emulgatoren schon während der Copolymerisation der Monomeren $A^1$ und $B^1$ bzw. $A^2$ und $B^2$ zuzugeben.

Die erfindungsgemäßen wäßrigen Lösungen oder wäßrigen Dispersionen eignen sich in hervorragender Weise zum Fetten und Füllen von Leder und Pelzfellen. Dabei werden keine organischen Lösungsmittel mitverwendet und es ist kein merklicher Hydrophobiereffekt mitzubeobachten.

Die Fettung des Leders und der Pelzfelle erfolgt nach üblichen und daher dem Fachmann bekannten Methoden und braucht deshalb hier nicht näher beschrieben zu werden.

Gegenüber der Fettung mit üblichen Fettungsmitteln verteilt sich das Produkt besser über den Lederquerschnitt. Es werden bei der Fettung mit beispielsweise nur 2 bis 3 Gew.-% Aktivsubstanz, bezogen auf die wäßrige Lösung oder Dispersion, gegenüber herkömmlichen Fettungsmitteln für diese Einsatzmenge ungewöhnliche weiche Leder erhalten. Das erhaltene Leder wird somit weicher, was zur Einsparung von anderen, gegebenenfalls mitverwendeten Fettungsmitteln führt. Dadurch und durch die außergewöhnlich feste Bindung des Polymers an die beispielsweise chromgegerbte Faser erhält man eine deutlich geringere Belastung des Abwassers nach der Fettung, d.h. das Produkt hat eine sehr gute Auszehrung aus der Fettungsflotte.

Die Empfindlichkeit gegenüber hartem Wasser und/oder verschleppten Chrom(III)-salzen wird überraschenderweise deutlich verringert. Ein Zusatz von Komplexbildnern braucht so nicht vorgenommen zu werden, was äußerst vorteilhaft ist, da Komplexbildner entgerbend wirken, d.h. Chrom aus dem chromgegerbten Leder herauslösen, und außerdem die Färbung beeinträchtigen können.

Die mit den erfindungsgemäßen wäßrigen Copolymerisat-Lösungen bzw. -Dispersionen gefetteten Leder weisen sehr gute Echtheiten sowie eine gute Fixierung der Hilfsmittel im Leder und damit eine geringe Extrahierbarkeit auf, was zu einer guten Waschbeständigkeit des Leders führt.

Beispiele

Folgende Emulgatoren wurden zu einer 25 gew.-%igen wäßrigen Dispersion eines verseiften und zu 50 % mit NaOH teilneutralisierten Copolymerisates aus $C_{20}/C_{24}$-α-Olefin und Maleinsäureanhydrid im molaren Verhältnis von 0,97 : 1 gegeben:

(1) Talgfettalkohol (nativer $C_{16}/C_{18}$-Fettalkohol) mit 25 EO
(2) Talgfettalkohol mit 80 EO
(3) Ölsäure mit 5,5 EO
(4) Isotridecanol mit 8 EO
(5) Ölsäureamid-monoethoxylat mit 10 EO
(6) Olsäuresarkosid
(7) Ölsaure-diethanolamid
(8) p-Isononylphenol mit 4,5 EO
(9) EO/PO-Blockpolymer (10 Gew.-% EO + 90 Gew.-% PO)
(10) $C_{12}/C_{14}$-Alkylglucosid
(11) 2-Sulfobernsteinsäure-di(2-ethylhexyl)ester-Natriumsalz
(12) Ölsäure-Triethanolamin-Salz
(13) $C_{13}/C_{15}$-Oxalkohol mit 21 EO + 4 PO
(14)$C_{13}/C_{15}$-Oxoalkohol mit 12 EO + 6 PO

Dabei betrug die Menge an Emulgator jeweils 5,3 Gew.%, bezogen auf die Menge an wäßriger Dispersion.

Mit diesen Emulsionen wurden auf entsäuerten chromgegerbten Rindsleder Fettungen mit jeweils 3 Gew.-% Aktivsubstanz durchgeführt. Die Weichheit der fertig hergestellten Leder wurde im Vergleich zur Behandlung mit dergleichen Copolymerisat-Dispersion ohne Emulgator als Standard wie folgt beurteilt:

| Emulgator | Differenz-Weichheit (Note) |
|---|---|
| (1) | 2 |
| (2) | 2 |
| (3) | 3 |
| (4) | 2 |
| (5) | 3 |
| (6) | 3 |
| (7) | 3 |
| (8) | 3 |
| (9) | 2 |
| (10) | 2 |
| (11) | 2 |
| (12) | 1 |
| (13) | 2 |
| (14) | 2 |
| Beurteilungsskala für die Weichheit der Leder: von Note 1 (hart) bis Note 10 (sehr weich) | |

Es gilt:

Differenz-Weichheit = Weichheit mit Emulgator - Weichheit ohne Emulgator

Die erhaltenen Leder waren weich und hatten einen angenehmen Griff.

## Patentansprüche

**1.** Wäßrige Lösungen oder wäßrige Dispersionen von Copolymerisaten, die durch radikalische Copolymerisation von

$A^1$) 40 bis 60 mol-% $C_6$- bis $C_{40}$-Monoolefinen oder $C_6$- bis $C_{40}$-Alkylvinylethern oder Mischungen aus $C_6$- bis $C_{40}$-Alkylvinylethern und bis zu 50 mol-%, bezogen auf die Gesamtmenge der Komponente $A^1$, $C_6$- bis $C_{40}$-Monoolefinen mit

$B^1$) 60 bis 40 mol-% monoethylenisch ungesättigten $C_4$- bis $C_8$-Dicarbonsäureanhydriden

oder durch radikalische Copolymerisation von

$A^2$) 50 bis 90 Gew.-% $C_6$- bis $C_{40}$-Alkylacrylaten oder -methacrylaten oder Vinylestern von $C_6$- bis $C_{40}$-Carbonsäuren oder Mischungen hieraus mit

$B^2$) 10 bis 50 Gew.-% monoethylenisch ungesättigten $C_3$- bis $C_{12}$-Carbonsäuren, monoethylenisch ungesättigten $C_4$- bis $C_{12}$-Dicarbonsäureanhydriden, Halbestern oder Halbamiden von monoethylenisch ungesättigten $C_4$- bis $C_{12}$-Dicarbonsauren, Amiden von monoethylenisch ungesättigten $C_3$- bis $C_{12}$-Carbonsäuren oder Mischungen hieraus

zu Copolymerisaten mit Molmassen von 500 bis 30 000 erhältlich sind, wobei die in wäßrigem Medium vorliegenden Carboxylgruppen zumindest partiell neutralisiert sind und ein Teil der Carboxylgruppen amidiert vorliegen kann, gekennzeichnet durch einen Gehalt von 0,5 bis 40 Gew.-%, bezogen auf die Menge an Copolymerisat, an Emulgatoren.

**2.** Wäßrige Lösungen oder wäßrige Dispersionen von Copolymerisaten nach Anspruch 1, gekennzeichnet durch einen Gehalt an Emulgatoren aus den Gruppen:

(a) alkoxylierte Fettalkohole oder Oxoalkohole der allgemeinen Formel I

$$R^1—(OX)_m—(OY)_n—OH \qquad (I)$$

in der

- $R^1$ geradkettiges oder verzweigtes $C_6$- bis $C_{30}$-Alkyl oder -Alkenyl bezeichnet,
- X und Y jeweils unabhängig voneinander für Ethylen oder Propylen stehen und
- m und n jeweils unabhängig voneinander Zahlen von 0 bis 100 bedeuten, wobei die Summe m + n 2 bis 100 betragen muß;

(b) Blockpolymere aus Ethylenoxy- und Propylenoxy-Einheiten mit einer Molmasse von 500 bis 15000;

(c) alkoxylierte Fettsäuren der allgemeinen Formel II

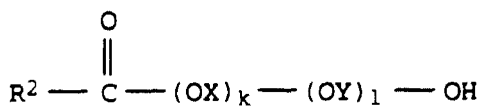

(II)

in der

- $R^2$ geradkettiges oder verzweigtes $C_5$- bis $C_{29}$-Alkyl oder -Alkenyl bezeichnet,
- X und Y jeweils unabhängig voneinander für Ethylen oder Propylen stehen und
- k und l jeweils unabhängig voneinander Zahlen von 0 bis 40 bedeuten, wobei die Summe k + l 2 bis 50 betragen muß;

(d) ethoxylierte Fettsäureamide der allgemeinen Formel III

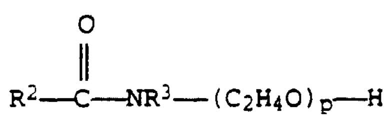

(III)

in der

- $R^2$ die oben genannte Bedeutung hat,
- $R^3$ Wasserstoff oder den Rest der Formel $—(C_2H_4O)_p—H$ bezeichnet und
- p eine Zahl von 2 bis 30 bedeutet;

(e) Fettsäurealkanolamide der allgemeinen Formel IV

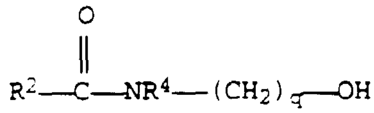 (IV)

in der

$R^2$ die oben genannte Bedeutung hat,

$R^4$ Wasserstoff oder den Rest der Formel $—(CH_2)_q—OH$ bezeichnet und

q eine Zahl von 2 bis 4 bedeutet;

(f) Fettsäure-Ammoniumsalze von gesättigten oder ungesättigten $C_6$- bis $C_{30}$-Fettsäuren mit Tri-$C_1$- bis $C_4$-alkylaminen oder mit Tetra-$C_1$- bis $C_4$-alkylammonium-Kationen, wobei die $C_1$- bis $C_4$-Alkylgruppen in beiden Fällen zusätzlich Hydroxylgruppen tragen;

(g) Fettalkoholphosphate der allgemeinen Formel V

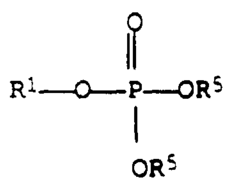 (V)

in der

$R^1$ die obengenannte Bedeutung hat und die beiden Reste

$R^5$ unabhängig voneinander für Wasserstoff oder $C_1$- bis $C_4$-Alkyl stehen, wobei mindestens einer der Reste $R^5$ ungleich Wasserstoff ist;

(h) $C_6$- bis $C_{30}$-Alkylglucoside;

(i) Alkylphenolalkoxylate der allgemeinen Formel (VI)

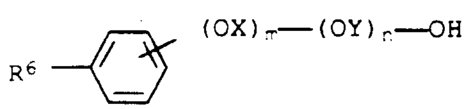 (VI)

in der

$R^6$ für geradkettiges oder verzweigtes $C_1$- bis $C_{20}$-Alkyl steht und

X, Y, m und n die oben genannten Bedeutungen haben;

(j) 2-Sulfobernsteinsäure-mono- oder -di-$C_5$- bis $C_{20}$-alkylester;

(k) N-($C_9$- bis $C_{20}$-Acyl)aminosäuren mit 2 bis 6 C-Atomen im Aminosäure-Grundkörper.

**3.** Verfahren zur Herstellung von wäßrigen Lösungen oder wäßrigen Dispersionen von Copolymerisaten, dadurch

gekennzeichnet, daß man

$A^1$) 40 bis 60 mol-% $C_6$- bis $C_{40}$-Monoolefine oder $C_6$- bis $C_{40}$-Alkylvinylether oder Mischungen aus $C_6$- bis $C_{40}$-Alkylvinylethern und bis zu 50 mol-%, bezogen auf die Gesamtmenge der Komponente $A^1$, $C_6$- bis $C_{40}$-Monoolefinen mit

$B^1$) 60 bis 40 mol-% monoethylenisch ungesättigten $C_4$- bis $C_8$-Dicarbonsäureanhydriden

oder

$A^2$) 50 bis 90 Gew.-% $C_6$- bis $C_{40}$-Alkylacrylate oder -methacrylate oder Vinylester von $C_6$- bis $C_{40}$-Carbonsäuren oder Mischungen hieraus mit

$B^2$) 10 bis 50 Gew.-% monoethylenisch ungesättigten $C_3$- bis $C_{12}$-Carbonsäuren, monoethylenisch ungesättigten $C_4$- bis $C_{12}$-Dicarbonsäureanhydriden, Halbestern oder Halbamiden von monoethylenisch ungesättigten $C_4$- bis $C_{12}$-Dicarbonsäuren, Amiden von monoethylenisch ungesättigten $C_3$- bis $C_{12}$-Carbonsäuren oder Mischungen hieraus radikalisch zu Copolymerisaten mit Molmassen von 500 bis 30 000 polymerisiert, die in wäßrigem Medium vorliegenden Carboxylgruppen zumindest partiell neutralisiert, ein Teil der Carboxylgruppen gegebenenfalls amidiert und einen Gehalt von 0,5 bis 40 Gew.-%, bezogen auf die Menge an Copolymerisat, an Emulgatoren zufügt.

**4.** Verwendung von wäßrigen Lösungen oder wäßrigen Dispersionen von Copolymerisaten gemäß Anspruch 1 oder 2 zum Fetten und Füllen von Leder und Pelzfellen.

**5.** Verfahren zum Fetten und Füllen von Leder und Pelzfellen, dadurch gekennzeichnet, daß man hierzu wäßrige Lösungen oder wäßrige Dispersionen von Copolymerisaten gemäß Anspruch 1 oder 2 einsetzt.

## Claims

**1.** An aqueous solution or aqueous dispersion of copolymers which are obtainable by free-radical copolymerization of

$A^1$) 40-60 mol% of $C_6$-$C_{40}$-monoolefins or $C_6$-$C_{40}$-alkyl vinyl ethers or mixtures of $C_6$-$C_{40}$-alkyl vinyl ethers and up to 50 mol%, based on the total amount of component $A^1$, of $C_6$-$C_{40}$-monoolefins with

$B^1$) 60-40 mol% of monoethylenically unsaturated $C_4$-$C_8$-dicarboxylic anhydrides

or by free-radical copolymerization of

$A^2$) 50-90% by weight of $C_6$-$C_{40}$-alkyl acrylates or methacrylates or vinyl esters of $C_6$-$C_{40}$-carboxylic acids or mixtures thereof with

$B^2$) 10-50% by weight of monoethylenically unsaturated $C_3$-$C_{12}$-carboxylic acids, monoethylenically unsaturated $C_4$-$C_{12}$-dicarboxylic anhydrides, monoesters or monoamides of monoethylenically unsaturated $C_4$-$C_{12}$-dicarboxylic acids, amides of monoethylenically unsaturated $C_3$-$C_{12}$-carboxylic acids or mixtures thereof

to give copolymers with molecular weights of 500 to 30,000, where the carboxyl groups which are present in aqueous medium are at least partially neutralized, and some of the carboxyl groups can be in amidated form, and which have a content of 0.5-40% by weight, based on the amount of copolymer, of emulsifiers.

**2.** An aqueous solution or aqueous dispersion of copolymers as claimed in claim 1, which have a content of emulsifiers from the groups:

(a) alkoxylated fatty alcohols or oxo alcohols of the general formula I

$$R^1 - (OX)_m - (OY)_n - OH \qquad (I)$$

where

| | |
|---|---|
| $R^1$ | is straight-chain or branched $C_6$-$C_{30}$-alkyl or -alkenyl, |
| X and Y | are each, independently of one another, ethylene or propylene and |
| m and n | are each, independently of one another, numbers from 0 to 100, where the total of m + n must be 2 to 100; |

(b) block copolymers of ethylenoxy and propylenoxy units with a molecular weight of 500 to 15,000;

(c) alkoxylated fatty acids of the general formula II

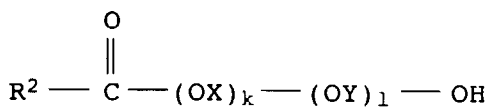

(II)

where

| | |
|---|---|
| $R^2$ | is straight-chain or branched $C_5$-$C_{29}$-alkyl or -alkenyl, |
| X and Y | are each, independently of one another, ethylene or propylene and |
| k and l | are each, independently of one another, numbers from 0 to 40, where the total of k + l must be 2 to 50; |

(d) ethoxylated fatty acid amides of the general formula III

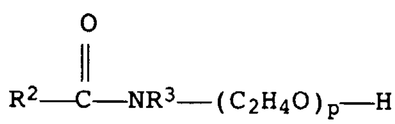

(III)

where

| | |
|---|---|
| $R^2$ | has the abovementioned meaning, |
| $R^3$ | is hydrogen or the radical of the formula $-(C_2H_4O)_p-H$ and |
| p | is a number from 2 to 30; |

(e) fatty acid alkanolamides of the general formula IV

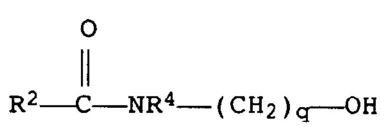

(IV)

where

$R^2$ has the abovementioned meanings,

$R^4$ is hydrogen or the radical of the formula $—(CH_2)_p—OH$ and

q is a number from 2 to 4,

(f) fatty acid ammonium salts comprising saturated or unsaturated $C_6$-$C_{30}$-fatty acids with tri-$C_1$-$C_4$-alkylamines or with tetra-$C_1$-$C_4$-alkylammonium cations, where the $C_1$-$C_4$-alkyl groups in both cases additionally carry hydroxyl groups;

(g) fatty alcohol phosphates of the general formula V

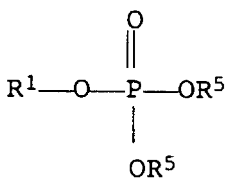

(V)

where

$R^1$ has the abovementioned meanings, and the two

$R^5$ radicals are, independently of one another, hydrogen or $C_1$-$C_4$-alkyl, where at least one of the $R^5$ radicals is not hydrogen;

(h) $C_6$-$C_{30}$-alkyl glucosides;

(i) alkylphenol alkoxylates of the general formula (VI)

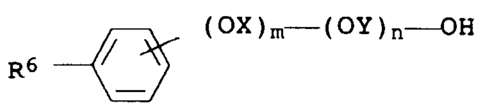

(VI)

where

$R^6$ is straight-chain or branched $C_1$-$C_{20}$-alkyl, and

X, Y, m and n have the abovementioned meanings;

(j) mono- or di-$C_5$-$C_{20}$-alkyl 2-sulfosuccinates;

(k) N-($C_9$-$C_{20}$-acyl)amino acids with 2-6 carbons in the underlying amino acid.

**3.** A process for preparing aqueous solutions or aqueous dispersions of copolymers, which comprises free-radical polymerization of

$A^1$) 40-60 mol% of $C_6$-$C_{40}$-monoolefins or $C_6$-$C_{40}$-alkyl vinyl ethers or mixtures of $C_6$-$C_{40}$-alkyl vinyl ethers and up to 50 mol%, based on the total amount of component $A^1$, of $C_6$-$C_{40}$-monoolefins with

$B^1$) 60-40 mol% of monoethylenically unsaturated $C_4$-$C_8$-dicarboxylic anhydrides

or by free-radical copolymerization of

$A^2$) 50-90% by weight of $C_6$-$C_{40}$-alkyl acrylates or methacrylates or vinyl esters of $C_6$-$C_{40}$-carboxylic acids of mixtures thereof with

$B^2$) 10-50% by weight of monoethylenically unsaturated $C_3$-$C_{12}$-carboxylic acids, monoethylenically unsaturated $C_4$-$C_{12}$-dicarboxylic anhydrides, monoesters or monoamides of monoethylenically unsaturated $C_4$-$C_{12}$-dicarboxylic acids, amides or monoethylenically unsaturated $C_3$-$C_{12}$-carboxylic acids or mixtures thereof

to copolymers with molecular weights of 500 to 30,000, at least partially neutralizing the carboxyl groups which are present in aqueous medium, where appropriate amidating some of the carboxyl groups and adding a content of 0.5 to 40% by weight, based on the amount of copolymer, of emulsifiers.

**4.** The use of aqueous solutions or aqueous dispersions of copolymers as claimed in claim 1 or 2 for the fatliquoring and filling of leather and fur skins.

**5.** A process for the fatliquoring and filling of leather and fur skins, which comprises using for this purpose aqueous solutions or aqueous dispersions of copolymers as claimed in claim 1 or 2.

## Revendications

**1.** Solutions aqueuses ou dispersions aqueuses de copolymères, qui peuvent être obtenues par copolymérisation radicalaire de

$A^1$) 40 à 60 % en moles de monooléfines en $C_6$-$C_{40}$ ou d'éthers alkylvinyliques en $C_6$-$C_{40}$ ou de mélanges d'éthers alkylvinyliques en $C_6$-$C_{40}$ et de jusqu'à 50% en moles, par rapport à la quantité totale du composant $A^1$, de monooléfines en $C_6$-$C_{40}$ avec
$B^1$) 60 à 40 % en moles d'anhydrides d'acides dicarboxyliques en $C_4$-$C_8$ à insaturation monoéthylénique,

ou par copolymérisation radicalaire de

$A^2$) 50 à 90 % en poids d'acrylates ou de méthacrylates d'alkyle en $C_6$-$C_{40}$ ou d'esters vinyliques d'acides carboxyliques en $C_6$-$C_{40}$ ou de mélanges de ceux-ci avec
$B^2$) 10 à 50 % en poids d'acides carboxyliques en $C_3$-$C_{12}$ à insaturation monoéthylénique, d'anhydrides d'acides dicarboxyliques en $C_4$-$C_{12}$ à insaturation monoéthylénique, d'hémiesters ou d'hémiamides d'acides dicarboxyliques en $C_4$-$C_{12}$ à insaturation monoéthylénique, d'amides d'acides carboxyliques en $C_3$-$C_{12}$ à insaturation monoéthylénique ou de mélanges de ceux-ci,

pour l'obtention de copolymères à masses moléculaires de 500 à 30 000, les groupes carboxyle présents en milieu aqueux étant au moins partiellement neutralisés, et une partie des groupes carboxyle pouvant se trouver sous forme amidée,
caractérisées par une teneur en émulsifiants allant de 0,5 à 40 % en poids, par rapport à la quantité du copolymère.

**2.** Solutions aqueuses ou dispersions aqueuses de copolymères selon la revendication 1, caractérisées par une teneur en émulsifiants choisis parmi:

(a) des oxoalcools ou alcools gras alcoxylés de formule générale I

$$R^1\text{-}(OX)_m\text{-}(OY)_n\text{-}OH \qquad (I)$$

dans laquelle

| | |
|---|---|
| $R^1$ | représente un groupe alkyle ou alcényle en $C_6$-$C_{30}$ à chaîne droite ou ramifié, |
| X et Y | représentent chacun, indépendamment l'un de l'autre, le groupe éthylène ou propylène, et |
| m et n | représentent chacun, indépendamment l'un de l'autre, un nombre allant de 0 à 100, la somme m + n devant s'élever à 2-100; |

(b) des polymères séquencés à base de motifs oxyde d'éthylène et oxyde de propylène, ayant une masse moléculaire de 500 à 15 000;
(c) des acides gras alcoxylés de formule générale II

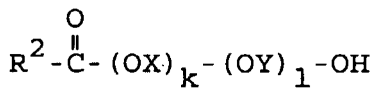

(II)

dans laquelle

$R^2$ représente un groupe alkyle ou alcényle en $C_5$-$C_{29}$ à chaîne droite ou ramifié,

X et Y représentent chacun, indépendamment l'un de l'autre, le groupe éthylène ou propylène, et

k et l représentent chacun, indépendamment l'un de l'autre, un nombre allant de 0 à 40, la somme k + l devant s'élever à 2-50;

(d) des amides d'acides gras oxyéthylés de formule générale III

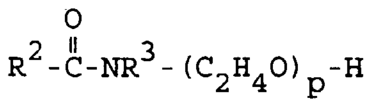

(III)

dans laquelle

$R^2$ a la signification donnée ci-dessus,

$R^3$ représente un atome d'hydrogène ou un radical de formule - $(C_2H_4O)_p$ -H, et

p représente un nombre allant de 2 à 30;

(e) des alcanolamides d'acides gras de formule générale IV

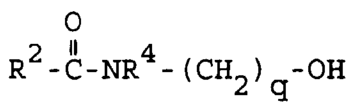

(IV)

dans laquelle

$R^2$ a la signification donnée ci-dessus,

$R^4$ représente un atome d'hydrogène ou un radical de formule - $(CH_2)_q$-OH, et

q représente un nombre allant de 2 à 4;

(f) des sels d'ammonium d'acides gras en $C_6$-$C_{30}$ saturés ou insaturés, avec des trialkyl($C_1$-$C_4$)amines ou avec des cations tétraalkyl($C_1$-$C_4$)ammonium, les groupes alkyle en $C_1$-$C_4$ portant dans les deux cas des groupes hydroxyle supplémentaires;

(g) des phosphates d'alcools gras de formule générale V

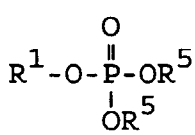

(V)

dans laquelle

$R^1$ a la signification donnée plus haut et

les deux radicaux $R^5$ représentent, indépendamment l'un de l'autre, un atome d'hydrogène ou un groupe alkyle en $C_1$-$C_4$, au moins l'un des radicaux $R^5$ étant différent d'un atome d'hydrogène;

(h) des alkyl($C_6$-$C_{30}$)glucosides;

(i) des alcoxylates d'alkylphénols de formule générale (VI)

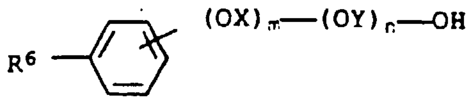

(VI)

dans laquelle

$R^6$ représente un groupe alkyle en $C_1$-$C_{20}$ à chaîne droite ou ramifié et
X, Y, m et n ont les significations données plus haut;

(j) des mono- ou diesters alkyliques en $C_5$-$C_{20}$ d'acide 2-sulfosuccinique;
(k) des N-acyl($C_9$-$C_{20}$)aminoacides ayant de 2 à 6 atomes de carbone dans le corps de base aminoacide.

**3.** Procédé pour la préparation de solutions aqueuses ou de dispersions aqueuses de copolymères, caractérisé en ce que l'on polymérise

$A^1$) de 40 à 60 % en moles de monooléfines en $C_6$-$C_{40}$ ou d'éthers alkylvinyliques en $C_6$-$C_{40}$ ou de mélanges d'éthers alkylvinyliques en $C_6$-$C_{40}$ et de jusqu'à 50 % en moles de monooléfines en $C_6$-$C_{40}$, par rapport à la quantité totale du composant $A^1$, avec
$B^1$) de 60 à 40 % en moles d'anhydrides d'acides dicarboxyliques en $C_4$-$C_8$ à insaturation monoéthylénique, ou
$A^2$) de 50 à 90 % en poids d'acrylates ou de méthacrylates d'alkyle en $C_6$-$C_{40}$ ou d'esters vinyliques d'acides carboxyliques en $C_6$-$C_{40}$ ou de mélanges de ceux-ci, avec
$B^2$) de 10 à 50 % en poids d'acides carboxyliques en $C_3$-$C_{12}$ à insaturation monoéthylénique, d'anhydrides d'acides dicarboxyliques en $C_4$-$C_{12}$ à insaturation monoéthylénique, d'hémiesters ou d'hémiamides d'acides dicarboxyliques en $C_4$-$C_{12}$ à insaturation monoéthylénique, d'amides d'acides carboxyliques en $C_3$-$C_{12}$ à insaturation monoéthylénique ou de mélanges de ceux-ci,

par polymérisation radicalaire, en copolymères à masses moléculaires de 500 à 30 000, les groupes carboxyle présents en milieu aqueux sont au moins partiellement neutralisés, une partie des groupes carboxyle est éventuellement amidée, et on ajoute de 0,5 à 40 % en poids d'émulsifiants, par rapport à la quantité du copolymère.

**4.** Utilisation de solutions aqueuses ou de dispersions aqueuses de copolymères selon la revendication 1 ou 2, pour le graissage et la nourriture de cuirs et peaux.

**5.** Procédé pour le graissage et la nourriture de cuirs et peaux, caractérisé en ce que l'on utilise à cet effet des solutions aqueuses ou dispersions aqueuses de copolymères selon la revendication 1 ou 2.